# EUROPÄISCHE PATENTSCHRIFT

(11) **EP 2 664 496 B1**
(45) Veröffentlichungstag und Bekanntmachung des Hinweises auf die Patenterteilung: **15.04.2015**
(21) Anmeldenummer: 12168040.9
(22) Anmeldetag: 15.05.2012
(51) Int. Cl.: B60Q 1/26, B29D 11/00, B23K 26/36, F21S 8/10

(54) **Verfahren zur Herstellung von Kraftfahrzeugleuchten**
Method for manufacturing motor vehicle lights
Procédé destiné à la fabrication de lampes de véhicules automobiles

(43) Veröffentlichungstag der Anmeldung: 20.11.2013
(73) Patentinhaber: odelo GmbH, 70329 Stuttgart (DE)
(72) Erfinder: Ricking, Thorsten, 71364 Winnenden (DE); Melzer, Horst, 71364 Winnenden (DE)
(74) Vertreter: Benninger, Johannes

(56) Entgegenhaltungen:
- WO-A1-2009/050856
- DE-A1- 3 018 808
- DE-A1-102004 046 408
- DE-A1-102005 046 793
- DE-A1-102007 006 026
- JP-A- 2005 267 861

## Beschreibung

Die Erfindung betrifft ein Verfahren gemäß dem Oberbegriff des Anspruchs 1. Die Druckschriften JP 2005267861 und WO 2009/050856 A1 offenbaren bekannte Verfahren zur Herstellung von Kraftfahrzeugleuchten. Aus WO 2009/050856 ist ein Verfahren bekannt, wobei die Bestückung eines Leuchtengehäuses mit internen Bauteilen vor dem Verschließen durch Auflegen einer Lichtscheibe erfolgt. JP 2005267861 A1 offenbart ein Verfahren, wobei eine Lichtscheibe in Übermaß hergestellt wird und anschließend mit einem Laser zugeschnitten wird.

Mit zunehmender Fertigungspräzision in der Automobiltechnik steigen die Anforderungen an die Passgenauigkeit von Fahrzeugteilen. Dabei gilt das Hauptaugenmerk dem vom Endkunden unmittelbar erkennbaren äußeren Erscheinungsbild von Kraftfahrzeugen, oft widergespiegelt durch das so genannte Spaltmaß, welches für Maßhaltigkeit, Abstand sowie Lage, beispielsweise hinsichtlich einer Verdrehlage, zweier oder mehrerer erkennbar unterschiedlicher, aneinander angrenzender Fahrzeugteile steht. Dabei ist ein möglichst gleichmäßiges und/oder kleines Spaltmaß einzuhalten, um die Qualitätsanforderungen einerseits hinsichtlich des Erscheinungsbilds und andererseits hinsichtlich einer möglichst strömungsgünstigen und "aus einem Guss" erscheinenden Fahrzeugoberfläche bzw. -kontur zu erfüllen.

Besonders augenfällig ist dies bei Kraftfahrzeugleuchten im Allgemeinen und Kraftfahrzeugheckleuchten im Speziellen, welche sich je nach Fahrzeugmodell teils nahtlos, teils mit möglichst präzise und gleichmäßig einzuhaltendem Spaltmaß bündig in die Karosserie bzw. Karosserieteile einfügen müssen.

Eine Fahrzeugleuchte umfasst im Wesentlichen einen von einem Leuchtengehäuse und einer Lichtscheibe umschlossenen Leuchteninnenraum und mindestens ein darin beherbergtes Leuchtmittel mit zumindest einer Lichtquelle, sowie gegebenenfalls zugehörige Elektronikbauteile für wenigstens eine Lichtfunktion der Kraftfahrzeugleuchte. In dem Leuchteninnenraum kann mindestens ein von außerhalb des Leuchteninnenraums durch eine oder mehrere von der Lichtscheibe verschlossene Lichtöffnungen hindurch gesehen hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuse selbst, beispielsweise vermittels einer zumindest teilweisen reflektierenden Beschichtung, gebildet sein.

Wenigstens einer Lichtquelle des Leuchtmittels können ein oder mehrere Optikelemente, wie etwa mindestens eine Linse, mindestens ein Rinnenkonzentrator, z.B. mindestens eine Parabolrinne (CPC; Compound Parabolic Concentrator) oder dergleichen zur Ausformung einer definierten Abstrahlcharakteristik zugeordnet sein.

Die Lichtscheibe ist durch eine transparente Abdeckung gebildet, welche den Leuchteninnenraum sowie die von diesem beherbergten Bauteile gegen Witterungseinflüsse schützt.

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel und/oder dessen mindestens eine Lichtquelle zu kaschieren. Das Leuchtengehäuse bzw. der Leuchteninnenraum kann in mehrere Leuchtenkammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere oder alle Leuchtenkammern gleiche oder jede Leuchtenkammer eine andere Lichtfunktionen erfüllen kann.

Bei einer Lichtfunktion handelt es sich dabei um eine durch Abstrahlung von Licht einer bestimmten Farbe in einer bestimmten Helligkeit und Richtung verwirklichte, zur Erfüllung einer Aufgabe vorgesehene Funktion der Fahrzeugleuchte. Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte speziell bei Kraftfahrzeugen eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer auch als Schlusslichtfunktion bezeichneten Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte. Beispiele für Fahrzeugleuchten im Automobilbereich sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Ein Leuchtmittel für wenigstens eine Lichtfunktion umfasst zumindest wenigstens eine Lichtquelle, beispielsweise mindestens eine Glühlampe oder mindestens eine Gasentladungslampe oder mindestens eine Leuchtdiode sowie gegebenenfalls Kombinationen hiervon.

Beispielsweise kommen als Lichtquellen von Leuchtmitteln für Fahrzeugleuchten vermehrt Leuchtdioden zum Einsatz. Diese bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Fahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Mit anderen Worten weisen LEDs bei gleicher Lichtstärke einen im Vergleich zu anderen Lichtquellen geringeren Stromverbrauch auf. Hierdurch kann bei einer Verwendung einer oder mehrerer LEDS als Lichtquelle eines Leuchtmittels beispielsweise in einer Kraftfahrzeugleuchte die Belastung eines zur Stromversorgung vorgesehenen Bordnetzes eines Kraftfahrzeugs verringert werden, einhergehend mit Einsparungen beim Energieverbrauch des Kraftfahrzeugs. Ferner weisen LEDs eine weit höhere Lebensdauer auf, als andere, zur Anwendung in einer Fahrzeugleuchte in Frage kommende Lichtquellen. Durch die längere Lebensdauer wird unter Anderem durch die geringere Ausfallquote die Betriebssicherheit und damit einhergehend die Qualität der Fahrzeugleuchte erhöht.

Zum Betrieb von LEDs als Lichtquellen für ein Leuchtmittel beispielsweise einer Kraftfahrzeugleuchte können eine oder mehrere mehr oder minder komplexe elektronische Steuerschaltungen vorgesehen sein, die beispielsweise auf einem oder mehreren Leuchtmittelträgern des Leuchtmittels angeordnet und in dem Leuchteninnenraum beherbergt sein können.

Ein einfaches Beispiel für eine elektronische Steuerschaltung betrifft die Angleichung unterschiedlicher Helligkeiten einzelner LEDs oder von LED-Strängen innerhalb einer Gruppe gemeinsam betriebener, auf einem oder mehreren Leuchtmittelträgern angeordneter LEDs. Eine solche elektronische Steuerschaltung besteht aus mindestens einem oder mehreren Vorwiderständen zur Anpassung der Vorwärtsspannung der LEDs an das Bordnetz. Beispielsweise ist bekannt, die LEDs im so genannten Binning nach Vorwärtsspannung und Intensität zu sortieren. Um Unterschiede zwischen mehreren LED-Strängen auszugleichen, die jeweils aus in Reihe geschalteten LEDs gleicher Vorwärtsspannung und Intensität bestehen, und um eine homogene Helligkeitsverteilung der benachbarten LED-Stränge aus LEDs mit unterschiedlicher Vorwärtsspannung und Intensität zu erhalten, wird zumindest jeder LED-Strang mit einem anderen Vorwiderstand versehen.

LEDs bedürfen darüber hinaus beim Einsatz als Lichtquelle insbesondere in Kraftfahrzeugleuchten oft einer separaten Ausfallerkennung. Dies ist bedingt durch die geringe Leistungsaufnahme von LEDs im Allgemeinen. Beispielsweise ist ein in einem Kraftfahrzeug untergebrachtes Steuergerät nicht in der Lage, eine dem Ausfall einer oder weniger LEDs entsprechende Änderung der Leistungsentnahme aus dem Bordnetz zu erkennen, da eine hieraus resultierende Bordnetzspannungsänderung unterhalb der im normalen Betrieb eines Kraftfahrzeugs auftretenden Bordnetzspannungsschwankungen liegt. Eine beispielsweise in der Kraftfahrzeugleuchte untergebrachte elektronische Schaltungsanordnung zur Ausfallerkennung erfasst den Ausfall einer oder mehrerer Leuchtdioden in der Kraftfahrzeugleuchte z.B. mittels eines oder mehrerer Komparatoren und teilt dies dem Steuergerät mit. Diese elektronische Schaltungsanordnung zur Ausfallerkennung kann durch eine beispielsweise auf dem Leuchtmittelträger aufgebrachte elektronische Steuerschaltung verwirklicht sein.

Darüber hinaus können LEDs weiterer elektronischer Steuerschaltungen bedürfen. Beispiele hierfür sind elektronische Steuerschaltungen:
- zur Regelung und/oder Steuerung der Helligkeit bzw. Leuchtkraft der LEDs, beispielsweise durch eine pulsweitenmodulierte Taktung der Stromversorgung für einen außerhalb des für das menschliche Auge wahrnehmbaren Bereichs gepulsten Betrieb,
- zur Kompensation oder Vermeidung elektromagnetischer Störungen, beispielsweise aufgebaut aus Kondensatoren und/oder Ferriten,
- zum Schutz der LEDs z.B. vor einer Überspannung des Bordnetzes oder vor fehlerhafter Polung, beispielsweise umfassend eine oder mehrere Zenerdioden,

Zusammengefasst muss für fast alle LED-Anwendungen eine mehr oder minder umfangreiche, für die speziellen LEDs ausgelegte elektronische Steuerschaltung z.B. auf den mindestens einen Leuchtmittelträger aufgebracht werden. Die elektronische Steuerschaltung umfasst im einfachsten Fall einen Vorwiderstand und eine Schutzdiode, kann aber je nach Anwendung auch wesentlich mehr Elektronikbauteile enthalten, wie z.B. Mikrokontroller bzw. Kontroller, Komparatoren, Transistoren, Schutzdioden, elektrische Widerstände z.B. als Vorwiderstand, Kondensatoren, Ferrite, etc.

Die Befestigung einer Kraftfahrzeugleuchte am Fahrzeug ist üblicherweise zwischen Leuchtengehäuse und mindestens einem eine im Folgenden unabhängig von ihrer Ausgestaltung als Einbauöffnung bezeichneten, beispielsweise eine Aufnahmeöffnung bildenden Aussparung für die Kraftfahrzeugleuchte beispielsweise in der Karosserie begrenzenden Karosserieteil vorgesehen.

Die Befestigung erfolgt üblicherweise mittels einer oder mehrerer Befestigungsvorrichtungen mit jeweils mindestens einem leuchtenseitig vorgesehenen ersten Befestigungselement sowie mindestens einem karosserie- bzw. fahrzeugseitig in der Einbauöffnung vorgesehenen, mit dem mindestens einen ersten Befestigungselement korrespondierenden zweiten Befestigungselement.

Beispielsweise ist durch DE 103 48 228 A1 bekannt, Kraftfahrzeugheckleuchten mit Gewindebolzen und Muttern in der Einbauöffnung der Karosserie des Kraftfahrzeuges zu befestigen. Dabei sind leuchtenseitig und fahrzeugseitig entsprechend mit den Gewindebolzen und Muttern korrespondierende Vorkehrungen getroffen, wie beispielsweise Öffnungen, Hintergreifungen, etc., welche zusammen mit den Gewindebolzen und Muttern erste und zweite Befestigungselemente bilden.

Um zwischen dem Rand der Kraftfahrzeugleuchte und dem Rand der Einbauöffnung über den Umfang einen innerhalb von Toleranzvorgaben konstant breiten Spalt zu bilden, gestaltet sich die Montage der Kraftfahrzeugleuchte schwierig. Ebenso verhält es sich bei der Montage von beispielsweise innerhalb von Toleranzvorgaben zumindest teils spaltfrei und/oder nahtlos, teils mit möglichst präzise und gleichmäßig einzuhaltendem Spaltmaß bündig in die Karosserie bzw. die Karosserieteile einzufügenden Kraftfahrzeugleuchten.

Dabei wird die Einhaltung der Toleranzvorgaben beeinflusst durch innerhalb einer Gesamttoleranz einer Kraftfahrzeugleuchte zulässige Oberflächenabweichungen zum Linienriß bzw. zur Hüllfläche der Kraftfahrzeugleuchte und zulässige Umrissabweichungen zum Linienriss bzw. zur Hüllfläche der Kraftfahrzeugleuchte. Die Gesamttoleranz einer Kraftfahrzeugleuchte ergibt sich dabei aus den Toleranzen der Einzelbauteile, wie etwa der verwendeten Spritzgussbauteile, sowie aus den Toleranzen der Fertigungsprozesse, wie beispielsweise für die Verbindung zweier oder mehrerer Bauteile einer Kraftfahrzeugleuchte verwendete Schweißprozesse.

Eine gesamte Toleranzkette von der Herstellung bis zum Einbau einer Kraftfahrzeugleuchte in eine Einbauöffnung umfasst damit zusätzlich zu den zur Gesamttoleranz angegebenen Einflussgrößen die zulässige Toleranz in Bezug auf Position und Lage beim Einbau der Kraftfahrzeugleuchte in die Einbauöffnung.

Im Folgenden wird diese Problematik deshalb zusammengefasst als "Erfüllung von Toleranzvorgaben" bezeichnet, unabhängig davon, ob es sich um eine Maßhaltung der Kraftfahrzeugleuchte in deren Herstellungsprozess oder um die Einhaltung eines Spaltmaßes bei deren Montage handelt, oder wenn es sich dabei zumindest zum Teil um einen spaltfreien, nahtlosen Übergang beispielsweise von der Lichtscheibe einer Kraftfahrzeugleuchte zu einem angrenzenden Karosserieteil oder einer Karosseriefläche oder eines sonstigen Bauteils oder einer sonstigen Oberfläche eines Kraftfahrzeugs handelt.

Stand der Technik sind Bearbeitungsstationen in denen Befestigungselemente beispielsweise rückseitig am Leuchtengehäuse der Kraftfahrzeugleuchte mechanisch nachgearbeitet werden, um Toleranzvorgaben erfüllen zu können.

Ebenfalls bekannt sind Bohr-/Fräs-Bearbeitungsstationen, bei denen die Aufnahmepunkte gesetzt oder Anschlagelemente nachbearbeitet werden.

Nachteilig an einer derartigen mechanischen Bearbeitung ist, dass dabei entstehende Späne als Verunreinigungen in den Leuchteninnenraum gelangen können.

Ferner weist eine solche mechanische Bearbeitung den Nachteil einer Gefahr einer Beschädigung der Lichtscheibe der während einer solchen mechanischen Bearbeitung mit der Lichtscheibe nach unten liegenden Kraftfahrzeugleuchte auf.

Diese mechanische Bearbeitung ist außerdem nicht geeignet, die in Zukunft immer enger werdenden Toleranzvorgaben prozesssicher erfüllen zu können.

Um diesen Nachteil zu beheben, ist ebenfalls durch DE 103 48 228 A1 bekannt, dass das leuchtenseitige erste Befestigungselement zweigeteilt ist. Das leuchtenseitig vorgesehene erste Befestigungselement besteht dabei aus einem unmittelbar an der Kraftfahrzeugleuchte an einem hierfür vorgesehenen Aufnahmepunkt am Leuchtengehäuse befestigten ersten Halteelement und einem an dem ersten Halteelement befestigten zweiten Halteelement. Für den späteren Einbau in der Einbauöffnung korrespondiert das zweite Halteelement mit dem karosserie- bzw. fahrzeugseitigen zweiten Befestigungselement. Das erste Halteelement weist eine Ausnehmung für das zweite Halteelement auf. Die Ausnehmung ist größer ausgeführt, als für das zweite Halteelement erforderlich. In die Ausnehmung ragt das zweite Halteelement. Um eine möglichst präzise Ausrichtung in der Einbauöffnung zu erhalten, wird die Kraftfahrzeugleuchte zunächst ohne leuchtenseitig vorgesehenes erstes Befestigungselement hergestellt. Die Kraftfahrzeugleuchte wird dann entsprechend ihrer Anordnung in einer Einbauöffnung lagegenau in eine Aufnahme eingelegt. Das erste Halteelement wird am hierzu vorgesehenen Aufnahmepunkt am Leuchtengehäuse der Kraftfahrzeugleuchte befestigt. In die Ausnehmung des ersten Halteelements wird das zweite Halteelement eingebracht und bezogen auf die lagegenaue Ausrichtung der Kraftfahrzeugleuchte in der Aufnahme ausgerichtet. Anschließend wird in den verbleibenden Raum der Ausnehmung ein Klebemittel eingebracht, welches unter Beibehaltung der Ausrichtung des zweiten Halteelements aushärtet. Anschließend wird die Kraftfahrzeugleuchte mit dem komplett fertig gestellten ersten Befestigungselement der Aufnahme entnommen.

Durch DE 10 2008 030 031 ist bekannt, dass das Klebemittel mittels Induktion erwärmbar und damit aktivierbar ist.

Durch DE 101 04 906 A1 ist bekannt, dass das erste Befestigungselement relativ zum Leuchtengehäuse verstellbar ist. Dabei muss das erste Befestigungselement bei der Montage der Kraftfahrzeugleuchte in der Einbauöffnung ausgerichtet werden.

Um die Montage von Kraftfahrzeugleuchten mit mehrteiligen, verstellbaren ersten Befestigungselementen zu vereinfachen ist durch DE 42 42 439 C1 bekannt, dass das erste Befestigungselement ein Halteteil aufweist, das auf einem Gewindeteil eines Trägers sitzt und mit dem der Träger gegen eine Auflage verspannbar ist, der mindestens eine Aufnahmeöffnung aufweist, durch welche der Gewindeteil ragt. Das Halteteil ist bereits vor der Montage auf dem Gewindeteil mit einem Sicherungs- und Spannteil gesichert, welches während der Montage in Verbindung mit dem Gewindeteil das Halteteil gegen die Auflage verspannt.

Durch DE 20 2006 021 021 U1 ist eine Laserschneideeinrichtung zur dreidimensionalen (3D) Bearbeitung von Werkstücken bekannt.

Zusammengefasst sind die bekannten Maßnahmen zur Verbesserung der Einhaltung eines Spaltmaßes sehr montage- und/oder zeitaufwändig und durch die Verwendung einer Vielzahl von miteinander zusammenwirkender, herzustellender und vorzuhaltender Bauteile sehr kostspielig.

Ein erstrebenswertes Ziel ist daher ein Verfahren zur Herstellung von Kraftfahrzeugleuchten zu entwickeln, welche die Erfüllung von Toleranzvorgaben mit einfachen und kostengünstigen Mitteln sicherstellt.

Der Erfindung liegt die Aufgabe zugrunde, ein Verfahren zur Herstellung von Kraftfahrzeugleuchten zu entwickeln, welches dieses Ziel erfüllt.

Die Aufgabe wird durch die Merkmale des unabhängigen Anspruchs gelöst.

Die Erfindung betrifft demnach ein Verfahren zur Herstellung von Kraftfahrzeugleuchten mit einem von einer Lichtscheibe und einem Leuchtengehäuse umschlossenen, zumindest ein Leuchtmittel mit wenigstens einer Lichtquelle beherbergenden Leuchteninnenraum.

Das Leuchtengehäuse weist zumindest eine Lichtöffnung für einen Lichtaustritt wenigstens einer Lichtquelle des mindestens einen Leuchtmittels aus dem Leuchteninnenraum auf. An der fertigen Kraftfahrzeugleuchte ist die mindestens eine Lichtöffnung von der Lichtscheibe verschlossen. Wenigstens eine Wandung des Leuchtengehäuses umgibt die Lichtöffnung. Die Wandung weist eine der umgebenen Lichtöffnung zugewandte Innenoberfläche und eine der umgebenen Lichtöffnung abgewandte Außenoberfläche auf. Eine um die Lichtöffnung umlaufende Randfläche grenzt entlang eines Innenrands an die Innenoberfläche und entlang eines Außenrands an die Außenoberfläche an und verbindet zwischen Innenrand und Außenrand die Innenoberfläche und die Außenoberfläche. Der Innenrand spannt eine Fläche der Lichtöffnung auf. Die Kontur des um die Lichtöffnung umlaufenden Innenrands der Randfläche widerspiegelt den Flächenverlauf der Lichtöffnung.

Die Randfläche setzt diesen Flächenverlauf vom Innenrand zum Außenrand fort.

Der Flächenverlauf kann eben oder zweidimensional gewölbt, wobei ein Schnitt in einer Richtung durch den Flächenverlauf eine Gerade bildet, oder dreidimensional gekrümmt verlaufen, wo sich kein Schnitt mit einem geraden Verlauf findet.

An dem Leuchtengehäuse ist mindestens ein Aufnahmepunkt zur Befestigung mindestens einer Befestigungsvorrichtung vorgesehen.

Das Verfahren sieht zunächst die Bestückung des in eine oder mehrere Leuchtenkammern unterteilten, mindestens eine von einer Lichtscheibe zu verschließenden Lichtöffnung aufweisenden Leuchtengehäuses mit den im Leuchteninnenraum beherbergten Einrichtungen und Bauteilen, wie etwa mindestens einem Leuchtmittel mit wenigstens einer Lichtquelle einschließlich deren elektrischer Kontaktierung, gegebenenfalls zumindest einem mindestens einer Lichtquelle wenigstens eines Leuchtmittels zugeordnetem Reflektor, gegebenenfalls einer oder mehrerer Optikscheiben sowie gegebenenfalls weiteren erforderlichen Elementen vor. Die Bestückung mit einem Reflektor kann wahlweise durch Beschichtung zumindest eins Teils der dem Leuchteninnenraum zugewandten Innenseite des Leuchtengehäuses mit einer reflektierenden Beschichtung erfolgen.

Die Kraftfahrzeugleuchte kann dabei mit allen oder nur einem Teil der Eingangs erwähnten Einrichtungen, Bauteilen, Elektronikbauteilen etc. ausgestattet sein, dementsprechend das Leuchtengehäuse mit diesen entsprechend bestückt werden kann.

Das Verfahren sieht darüber hinaus vor, eine gemäß dem Flächenverlauf der Lichtöffnung geformte Lichtscheibe der Kraftfahrzeugleuchte in einem Übermaß herzustellen, so dass die Lichtscheibe in auf der Randfläche aufgelegtem Zustand nicht nur auf der Randfläche aufliegt, sondern in mindestens einer Richtung über den Außenrand der Randfläche übersteht und damit die Randfläche in Richtung von der Lichtöffnung weg über die Außenoberfläche hinaus überragt.

Besonders bevorzugt wird die Lichtscheibe so hergestellt, dass sie die Lichtscheibe allseitig den Außenrand und damit die Randfläche in Richtung von der Lichtöffnung weg überragt. Mit anderen Worten steht die Lichtscheibe vorzugsweise in mehr als einer Richtung, besonders bevorzugt allseitig über den Außenrand der Randfläche über.

Anschließend wird der Leuchteninnenraum verschlossen, indem die Lichtscheibe auf der Randfläche aufliegend mit dem Leuchtengehäuse beispielsweise durch Kleben, Verschweißen, odgl. vorzugsweise stoffschlüssig verbunden wird, wobei die Lichtscheibe in einer oder mehreren, vorzugsweise allem Richtungen über den Außenrand übersteht.

Gegebenenfalls können nun ein oder mehrere erste Befestigungselemente mindestens einer zur Befestigung der Kraftfahrzeugleuchte in einer Einbauöffnung eines Karosserieteils oder einer Karosserie eines Kraftfahrzeugs vorgesehenen Befestigungsvorrichtung an den hierfür vorgesehenen Aufnahmepunkten am Leuchtengehäuse angebracht werden.

Alternativ oder zusätzlich können weitere Behandlungsschritte, wie beispielsweise Polieren der Lichtscheibe und/oder Temperprozesse, beispielsweise zum Relaxieren der Lichtscheibe und /oder Qualitätsprüfungen etc. der mit der im Übermaß hergestellten Lichtscheibe versehenen Kraftfahrzeugleuchte vorgenommen werden.

Die Kraftfahrzeugleuchte wird dann entsprechend ihrer Anordnung in einer Einbauöffnung lagegenau in eine Aufnahme eingebracht, vorzugsweise eingelegt.

Das lagegenaue Einbringen der Kraftfahrzeugleuchte in der Aufnahme unter gleichzeitiger positions- und verdrehgenauer Ausrichtung erfolgt vorzugsweise unter Verwendung der als Fixpunkte dienenden Aufnahmepunkte am Leuchtengehäuse oder über die gegebenenfalls bereits montierten ersten Befestigungselemente, welche die tatsächliche Ausrichtung und Lage der Kraftfahrzeugleuchte relativ zu dem einen oder den mehreren Aufnahmepunkten in der Einbauöffnung widerspiegeln.

Bevorzugt kann die Kraftfahrzeugleuchte dabei vorzugsweise über die Aufnahmepunkte oder die gegebenenfalls bereits montierten ersten Befestigungseinrichtungen in der Aufnahme ausgerichtet und gehalten werden.

Um eine maximal mögliche präzise Erfüllung von Toleranzvorgaben insgesamt und insbesondere beim späteren Einbau in der Einbauöffnung zu erhalten, wird im Anschluss die über den Außenrand ragende Partie der Lichtscheibe unter Bezugnahme auf die als Fixpunkte dienenden Aufnahmepunkte entsprechend den Toleranzvorgaben zugeschnitten.

Das Zuschneiden erfolgt besonders bevorzugt als 3D-Laserbeschnitt vermittels 3D-Laserschneiden.

Das Laserschneiden ist ein thermisches Trennverfahren, bei dem ein fokussierter Laserstrahl den transparenten Kunststoff der Lichtscheibe aufschmilzt und verdampft. Durch den geometrisch und thermisch exakt definierten Energieeintrag des Laserstrahls können 2D- und 3D-Konturen somit berührungslos und kraftfrei geschnitten werden. Somit können wesentlich exaktere Toleranzbearbeitungen durchgeführt werden, als dies mit dem Stand der Technik entsprechenden mechanischen Bearbeitungsanlagen, bei denen die Aufnahmepunkte und/oder Anschlagelemente und/oder die Befestigungsvorrichtung bzw. deren Befestigungselemente gesetzt und/oder nachbearbeitet werden, möglich ist.

Das Material der Lichtscheibe ist vorzugsweise ein Polymethylmethacrylat (PMMA). PMMA kann beispielsweise mittels einer CO2-Laserquelle geschnitten werden. Auch andere Laserquellen sind denkbar, welche Wellenlängen im Bereich von 800 nm bis 1 mm zu erzeugen in der Lage sind, ebenso wie grundsätzlich andere Materialien als PMMA für die Lichtscheibe denkbar sind.

Bei der Laserbearbeitung treten keine Späne oder Partikel auf, die in spanenden Bearbeitungsanlagen trotz Absauganlagen zu Verschmutzungen oder sogar zu Partikeln im Leuchteninnenraum führen können.

Nun wird die präzise bearbeitete und fertig hergestellte Kraftfahrzeugleuchte der Aufnahme entnommen.

Sofern noch keine leuchtenseitigen ersten Befestigungselemente montiert sind, kann dies vor oder nach der Entnahme aus der Aufnahme nachgeholt werden.

Die nach deren Entnahme aus der Aufnahme vollständig zum Einbau in eine Einbauöffnung vorbereitete Kraftfahrzeugleuchte kann anschließend einer Qualitätsprüfung unterzogen werden. Dabei kann vorzugsweise in Linie mit dem Produktionsablauf oder im Produktionsablauf untergebracht eine Vermessung stattfinden, wobei die Maßhaltigkeit der zugeschnittenen Lichtscheibe kontrolliert werden kann.

Dabei kann das Zuschneiden der Lichtscheibe anhand der in einer solchen Qualitätsprüfung kontrollierten Maßhaltigkeit der zugeschnittenen Lichtscheibe kalibiriert werden.

Im Anschluss an die Entnahme aus der Aufnahme oder im Anschluss an eine gegebenenfalls vorgesehene Qualitätsprüfung kann die nunmehr vollständig zum Einbau in die Einbauöffnung vorbereitete Kraftfahrzeugleuchte beispielsweise direkt einer Montagelinie zum Einbau in eine Einbauöffnung zugeführt werden, oder in eine Transportverpackung eingebracht und bis zu ihrem Einbau in eine Einbauöffnung gelagert und/oder transportiert werden.

Ebenfalls ist denkbar, leuchtenseitig vorgesehene erste Befestigungselemente erst nach dem Transport der Fahrzeugleuchten zu einer Fertigungslinie für Kraftfahrzeuge, wo die Kraftfahrzeugleuchten in entsprechende Einbauöffnungen von Karosserieteilen bzw. Karosserien befestigt werden, zu montieren. Dies kann beispielsweise unmittelbar beim Einbau der Kraftfahrzeugleuchten in die Einbauöffnungen erfolgen.

Es ist ersichtlich, dass die Erfindung durch eine Verringerung der Toleranzen von Kraftfahrzeugheckleuchten und deren zunächst in einem Übermaß hergestellter, überstehend montierten Lichtscheiben vermittels 3D-Laserschneidens verwirklicht sein kann.

Dabei ist beispielsweise ein präziser 3D-Laserbeschnitt der in einem Übermaß über den Außenrand der Randfläche einer eine Lichtöffnung umgebenden Wandung eines Leuchtengehäuses überstehenden Lichtscheibe nach deren Montage durch Befestigung am und/oder Verbinden mit dem Leuchtengehäuse unter Verschluss der Lichtöffnung vorgesehen, um eine Kraftfahrzeugleuchte herzustellen, welche besonders toleranzarm in eine hierfür vorgesehene, beispielsweise eine Aufnahmeöffnung bildenden Aussparung eines Kraftfahrzeugs eingepasst ist.

Dies wird erreicht, indem zunächst die Kraftfahrzeugleuchte mit einem von einem Leuchtengehäuse und einer Lichtscheibe umschlossenen Leuchteninnenraum und darin beherbergt zumindest einem Leuchtmittel mit wenigstens einer Lichtquelle durch Verbinden von Lichtscheibe und Leuchtengehäuse fertig gestellt wird.

Das Leuchtengehäuse weist hierbei auf seiner einer im fertigen Zustand der Kraftfahrzeugleuchte durch die Lichtscheibe verschlossenen Lichtöffnung abgewandten Seite zumindest einen Aufnahmepunkt auf, welcher mit zur Befestigung in einer Einbauöffnung eines Kraftfahrzeugs vorgesehenen Befestigungselementen einer Befestigungsvorrichtung korrespondiert. Die Aufnahmepunkte sowie ein oder mehrere wahlweise hieran befestigte Befestigungselemente geben dabei ein absolut einzuhaltendes Maß für den Einbau der fertigen Kraftfahrzeugleuchte in die Einbauöffnung vor.

Die Lichtscheibe ist hierbei in Übermaß ausgeführt, wobei die Lichtscheibe die von den die der Lichtscheibe zugewandte Lichtöffnung des Leuchtengehäuses umgebende bzw. umgebenden Wandungen aufgespannte Fläche überragt.

Die Erfindung sieht nunmehr vor, die mit der Lichtscheibe im Übermaß fertig gestellte Kraftfahrzeugleuchte in einer Aufnahme anzuordnen, und anschließend die durch den Verlauf der durch die am Kraftfahrzeug vorgesehenen Einbauöffnung gegebene Kontur gegebenenfalls unter Einhaltung eines konstanten Spaltmaßes zwischen dem Außenumfang der Lichtscheibe und der Kontur der Einbauöffnung vorzugsweise vermittels 3D-Laserschneiden auf die zunächst im Übermaß ausgeführte Lichtscheibe der Kraftfahrzeugleuchte zu übertragen, so dass die Lichtscheibe im Anschluss ein entsprechend den Toleranzvorgaben absolutes Maß einhält.

Vorteile ergeben sich neben einer Erfüllung des Eingangs erwähnten erstrebenswerten Ziels durch eine Verringerung der Einbautoleranzen, da der Umriss der Lichtscheibe erst nach Fertigstellung der Kraftfahrzeugleuchte, also wenn keinerlei Veränderungen der äußeren Gestalt beispielsweise durch Tempern oder ähnliche Herstellungsschritte mehr auftreten können, auf die Lichtscheibe übertragen wird. Diese Übertragung ist darüber hinaus besonders präzise, da der vorzugsweise als Laserzuschnitt ausgeführte Beschnitt der Lichtscheibe auf die Lage und Position der mit den Aufnahmepunkten am Leuchtengehäuse zusammenwirkenden, in der Einbauöffnung am Kraftfahrzeug vorgesehenen Befestigungselementen übereinstimmend ausgeführten Aufnahme eingestellt werden kann, demnach einem Zuschnitt bzw. Laserzuschnitt in der Einbauöffnung entspricht.

Ein weiterer Vorteil ergibt sich durch den Laserzuschnitt selbst, welcher berührungslos und damit spanfrei mit hoher Oberflächengüte ausgeführt werden kann. Auch entfällt bei einem Laserzuschnitt eine Nachbehandlung der beschnittenen Oberfläche am Umriss der Lichtscheibe.

Ein zusätzlicher Vorteil ergibt sich durch eine höhere Flexibilität in Bezug auf die Verwendung einer zur Durchführung des Verfahrens vorgesehenen Vorrichtung für verschiedene Kraftfahrzeugleuchten. Im Vergleich zum Stand der Technik, wo jede mechanische Bearbeitungsstation jeweils bauteilspezifisch aufgebaut ist, kann mit einer 3D-Laserschneidanlage, bei der der Laserbearbeitungskopf mittels Roboter oder CNC Achssystem an eine Bearbeitungsstelle geführt wird, eine wesentlich höhere Flexibilität erreicht werden. Hier könnte durch Austausch einer entsprechenden Aufnahme und Programmwechsel der Bearbeitungsanlage flexibel von einer Kraftfahrzeugleuchte auf eine geometrisch andere Kraftfahrzeugleuchte umgestellt werden.

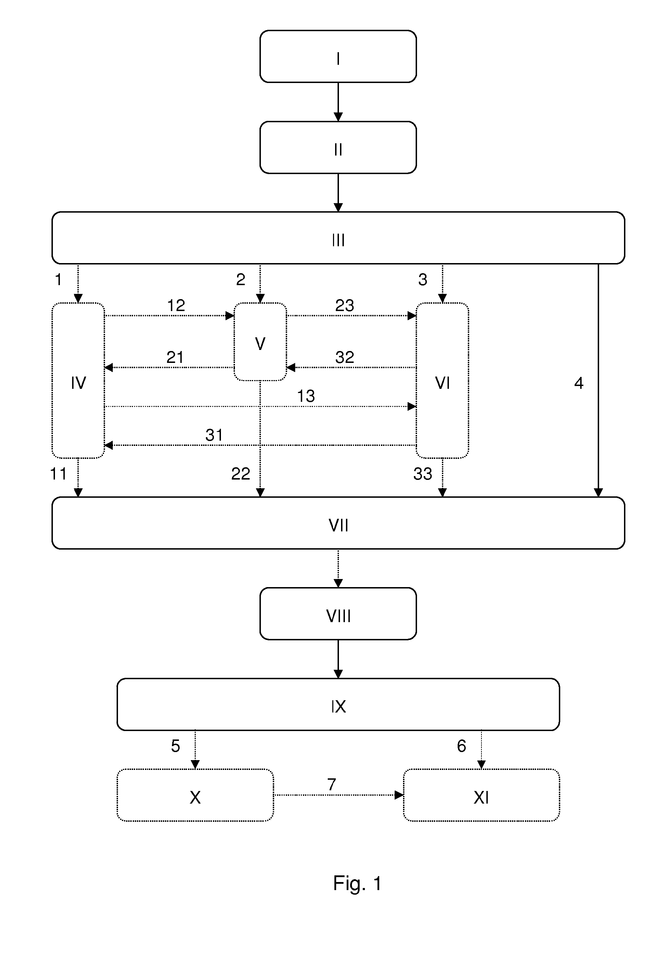

Die Erfindung wird nachfolgend anhand von in der Zeichnung dargestellter Ausführungsbeispiele näher erläutert. Die einzige Zeichnung Fig. 1 zeigt in schematischer Darstellung ein Ablaufdiagramm eines Verfahrens zur Herstellung von Kraftfahrzeugleuchten.

Ein in Fig. 1 in seinem Ablauf dargestelltes Verfahren ist zur Herstellung von Kraftfahrzeugleuchten vorgesehen, welche Kraftfahrzeugleuchten jeweils:
- einen von einer Lichtscheibe und einem Leuchtengehäuse umschlossenen, zumindest ein Leuchtmittel mit wenigstens einer Lichtquelle beherbergenden Leuchteninnenraum, und
- ein Leuchtengehäuse mit zumindest einer an der fertigen Kraftfahrzeugleuchte von der Lichtscheibe verschlossen und von wenigstens einer Wandung des Leuchtengehäuses umgebenen Lichtöffnung für einen Lichtaustritt wenigstens einer Lichtquelle des mindestens einen Leuchtmittels aus dem Leuchteninnenraum, aufweisen, wobei
- die wenigstens eine Wandung eine der umgebenen Lichtöffnung zugewandte Innenoberfläche und eine der umgebenen Lichtöffnung abgewandte Außenoberfläche sowie eine um die Lichtöffnung umlaufende Randfläche aufweist, welche entlang eines mit seiner Kontur den Flächenverlauf der Lichtöffnung widerspiegelnden Innenrands an die Innenoberfläche und entlang eines Außenrands an die Außenoberfläche angrenzt und zwischen Innenrand und Außenrand die Innenoberfläche und die Außenoberfläche verbindet und den Flächenverlauf der Lichtöffnung fortsetzt, und
- an dem Leuchtengehäuse mindestens ein Aufnahmepunkt zur Befestigung mindestens einer Befestigungsvorrichtung zur Befestigung der fertigen Kraftfahrzeugleuchte in einer Einbauöffnung an einem Karosserieteil oder einer Karosserie eines Kraftfahrzeugs vorgesehen ist.

Das Verfahren sieht in einem ersten Verfahrensschritt 1 eine Bestückung des in eine oder mehrere Leuchtenkammern unterteilten, mindestens eine von einer Lichtscheibe zu verschließende Lichtöffnung aufweisenden Leuchtengehäuses mit den von der fertigen Kraftfahrzeugleuchte im Leuchteninnenraum beherbergten Einrichtungen und Bauteilen vor. Zu diesen Einrichtungen und Bauteilen zählen beispielsweise:
- das mindestens eine Leuchtmittel mit seiner wenigstens einen Lichtquelle,
- die elektrische Kontaktierung des mindestens einen Leuchtmittels sowie gegebenenfalls dessen wenigstens einer Lichtquelle, sofern eine solche nicht bereits auf einem Leiterbahnträger, beispielsweise auf einer Platine oder einem in MID-Technik (MID-Technik: Molded-Interconnect-Device-Technik) hergestellten spritzgegossenen Schaltungsträger, eines in einem separaten Herstellungsprozess fertig gestellten Leuchtmittels integriert ist,
- gegebenenfalls zusätzliche, zum Betrieb der wenigstens einen Lichtquelle des mindestens einen Leuchtmittels und/oder zu dessen Betrieb in Verbindung mit einem Kraftfahrzeug erforderliche, Eingangs beschriebene Elektronikbauteile, sofern diese nicht bereits auf einem Leiterbahnträger, beispielsweise auf einer Platine oder einem in MID-Technik hergestellten spritzgegossenen Schaltungsträger, eines in einem separaten Herstellungsprozess fertig gestellten Leuchtmittels beispielsweise mit wenigstens einer LED als zumindest eine Lichtquelle montiert und elektrisch kontaktiert sind,
- gegebenenfalls zumindest ein mindestens einer Lichtquelle wenigstens eines Leuchtmittels zugeordneter Reflektor, sofern ein solcher nicht bereits in einem vorangehenden, auf die Herstellung des Leuchtengehäuses folgenden Bearbeitungsschritt durch Aufbringen einer reflektierenden Beschichtung zumindest auf Teile der Innenfläche des Leuchtengehäuses hergestellt worden ist,
- gegebenenfalls eine oder mehrere Optikscheiben, sowie
- gegebenenfalls weitere erforderliche Elemente.

Das Verfahren sieht in einem zweiten Verfahrensschritt II eine Herstellung einer gemäß dem Flächenverlauf der Lichtöffnung geformten Lichtscheibe der Kraftfahrzeugleuchte in einem Übermaß vor. Der Flächenverlauf kann eben oder zweidimensional oder dreidimensional gewölbt sein, wobei bei einer zweidimensional gewölbten Ausführung ein Schnitt in einer Richtung durch den Flächenverlauf hindurch eine Gerade bildet, und in einer dreidimensional gekrümmten Ausführung sich kein Schnitt mit einem geraden Verlauf findet.

Die Herstellung in einem Übermaß erfolgt dabei so, dass die Lichtscheibe in auf der Randfläche aufgelegtem Zustand nicht nur auf der Randfläche aufliegt, sondern in mindestens einer Richtung über den Außenrand der Randfläche übersteht und damit die Randfläche in Richtung von der Lichtöffnung weg über die Außenoberfläche hinaus überragt. Vorzugsweise wird die Lichtscheibe dabei so hergestellt, dass sie wenn sie auf die Randfläche aufgelegt ist, allseitig über den Außenrand der Randfläche übersteht. Mit anderen Worten überragt die Lichtscheibe vorzugsweise in mehr als einer Richtung, besonders bevorzugt allseitig den Außenrand und damit die Randfläche in Richtung von der Lichtöffnung weg.

Das Verfahren sieht in einem dritten Verfahrensschritt III ein Verschließen der Lichtöffnung und damit des Leuchteninnenraums durch Auflegen der Lichtscheibe auf die Randfläche unter anschließendem, vorzugsweise stoffschlüssigem Verbinden der Lichtscheibe mit dem Leuchtengehäuse, besonders bevorzugt mit der Randfläche des Leuchtengehäuses, beispielsweise durch Kleben, Verschweißen oder dergleichen, insbesondere Laserschweißen, vor. Die nach dem dritten Verfahrensschritt III fest mit dem Leuchtengehäuse verbundene Lichtscheibe steht dabei in der mindestens einen Richtung, vorzugsweise in allen Richtungen, über den Außenrand der Radfläche über.

Das Verfahren sieht in einem durch gestrichelte Pfeile 1 und 11 dargestellten weiteren Verlauf einen alternativen vierten Verfahrensschritt IV vor, in dem in einem beispielsweise in Linie zum Herstellungsprozess der Kraftfahrzeugleuchten angeordneten Behandlungsschritt beispielsweise ein Polieren der Lichtscheibe erfolgt.

Es kann alternativ zum vierten Verfahrensschritt IV, wie durch gestrichelte Pfeile 2 und 22 dargestellt, oder zusätzlich zum vierten Verfahrensschritt IV, wie durch gestrichelte Pfeile 1 und 12 und 22 dargestellt, in einem fünften Behandlungsschritt V beispielsweise ein Tempern der Kraftfahrzeugleuchte, beispielsweise zum Relaxieren der Lichtscheibe, vorgesehen sein.

Es kann:
- alternativ zum vierten Verfahrensschritt IV und alternativ zum fünften Verfahrensschritt V, wie durch gestrichelte Pfeile 3 und 33 dargestellt, oder
- alternativ zum vierten Verfahrensschritt IV und zusätzlich zum fünften Verfahrensschritt IV, wie durch gestrichelte Pfeile 2, 23 und 33 dargestellt, oder
- zusätzlich zum vierten Verfahrensschritt IV und alternativ zum fünften Verfahrensschritt IV, wie durch gestrichelte Pfeile 1, 13 und 33 dargestellt, oder
- zusätzlich zum vierten Verfahrensschritt IV und zusätzlich zum fünften Verfahrensschritt IV, wie durch gestrichelte Pfeile 1, 12, 23 und 33 dargestellt,
ein sechster Verfahrensschritt VI vorgesehen sein, in dem beispielsweise eine Qualitätsprüfung der bis hierhin hergestellten Kraftfahrzeugleuchte vorgesehen ist.

Wichtig ist hervorzuheben, dass die Aufzählung der alternativen oder zusätzlichen vierten, fünften und sechsten Verfahrensschritte IV, V, VI nicht vollständig oder abschließend zu verstehen ist. Beispielsweise können alternativ oder zusätzlich zu einem oder mehreren der aufgezählten vierten, fünften und sechsten Verfahrensschritte IV, V, VI Behandlungsschritte, wie beispielsweise das Entladen beispielsweise durch Polieren elektrostatisch aufgeladener Lichtscheiben, oder Verfahrensschritte, wie das Anbringen mindestens eines Befestigungselements mindestens einer zur Befestigung der Kraftfahrzeugleuchte in einer Einbauöffnung eines Karosserieteils oder einer Karosserie eines Kraftfahrzeugs vorgesehenen Befestigungsvorrichtung an dem mindestens einen hierfür vorgesehenen Aufnahmepunkt am Leuchtengehäuse vorgesehen sein.

Auch die Abfolge der beispielhaft genannten, möglichen zusätzlichen Verfahrensschritte IV, V VI sowie der beispielhaft genannten, möglichen zusätzlichen Behandlungs- und/oder Verfahrensschritte kann in einer anderen, als der beschriebenen Kombination und/oder, wie durch die in umgekehrter Richtung verlaufenden Pfeile 21, 31 und 32 dargestellt, in einer anderen, als der beschriebenen Reihenfolge im Anschluss an den dritten Verfahrensschritt III und vor einem nachfolgend beschriebenen siebten Verfahrensschritt VII erfolgen.

Erfindungs- und Verfahrenswesentlich ist, wie durch den Pfeil 4 unter alternativer Umgehung der vorangehend beschriebenen, wahlweise zusätzlichen, vierten, fünften und sechsten Verfahrensschritte IV, V, VI dargestellt, dass im Anschluss auf die Herstellung einer Kraftfahrzeugleuchte mit einer von einer im Übermaß hergestellten Lichtscheibe verschlossenen Lichtöffnung im ersten Verfahrensschritt I, zweiten Verfahrensschritt II und dritten Verfahrensschritt III, auf den dritten Verfahrensschritt III ein siebter Verfahrensschritt VII folgt, welcher das Einbringen, vorzugsweise Einlegen der Kraftfahrzeugleuchte entsprechend ihrer Anordnung in einer Einbauöffnung eines Karosserieteils oder einer Karosserie eines Kraftfahrzeugs lagegenau in eine Aufnahme vorsieht.

Das lagegenaue Einbringen der Kraftfahrzeugleuchte in die Aufnahme unter Ausrichtung kann vermittels Verwendung des mindestens einen Aufnahmepunkts am Leuchtengehäuse oder über wenigstens ein gegebenenfalls bereits an dem zumindest einen Aufnahmepunkt montiertes Befestigungselement als mindestens ein Fixpunkt, welcher die tatsächliche Ausrichtung und Lage der Kraftfahrzeugleuchte relativ zu dem einen oder den mehreren Aufnahmepunkten in der Einbauöffnung widerspiegelt, erfolgen.

Beispielsweise kann die Kraftfahrzeugleuchte über den mindestens einen Aufnahmepunkt oder die wenigstens einen gegebenenfalls bereits montierten Befestigungseinrichtung in der Aufnahme ausgerichtet und gehalten werden.

An den siebten Verfahrensschritt VII schließt sich ein achter Verfahrensschritt VIII an, bei dem das Zuschneiden der über den Außenrand ragenden Partie der Lichtscheibe unter Bezugnahme auf die als Fixpunkte dienenden Aufnahmepunkte entsprechend Toleranzvorgaben, um eine maximal mögliche präzise Erfüllung der Toleranzvorgaben insgesamt und insbesondere beim späteren Einbau in der Einbauöffnung zu erhalten, vorgesehen ist.

Das Zuschneiden im achten Verfahrensschritt VIII erfolgt bevorzugt als 3D-Laserbeschnitt vermittels 3D-Laserschneiden.

Das Laserschneiden ist ein thermisches Trennverfahren, bei dem ein fokussierter Laserstrahl den transparenten Kunststoff der Lichtscheibe aufschmilzt und verdampft. Durch den geometrisch und thermisch exakt definierten Energieeintrag des Laserstrahls können 2D- und 3D-Konturen somit berührungslos und kraftfrei geschnitten werden. Somit können wesentlich exaktere Toleranzbearbeitungen durchgeführt werden, als dies mit dem Stand der Technik entsprechenden, mechanischen Bearbeitungsanlagen möglich ist.

Bei der Laserbearbeitung treten keine Späne oder Partikel auf, die in spanenden Bearbeitungsanlagen trotz Absauganlagen zu Verschmutzungen oder sogar zu Partikeln im Leuchteninnenraum führen können.

Bei der für das Laserschneiden verwendeten Laserquelle handelt es sich beispielsweise um eine CO2-Laserquelle, mit welcher das in der Regel aus PMMA bestehende Material der Lichtscheibe geschnitten werden kann.

In einem darauf folgenden neunten Verfahrensschritt IX erfolgt die Entnahme der präzise bearbeiteten und fertig hergestellten Kraftfahrzeugleuchte aus der Aufnahme, wodurch das Verfahren bevorzugt endet.

Wie durch einen gestrichelten Pfeil 5 dargestellt, kann im Anschluss an den neunten Verfahrensschritt IX die nach deren Entnahme aus der Aufnahme vollständig zum Einbau in eine Einbauöffnung eines Karosserieteils oder einer Karosserie eines Kraftfahrzeugs vorbereitete Kraftfahrzeugleuchte in einem zehnten Verfahrensschritt X einer Qualitätskontrolle unterzogen werden. Dabei kann die Maßhaltigkeit der zugeschnittenen Lichtscheibe kontrolliert werden.

Dabei kann das Zuschneiden der Lichtscheibe anhand der in einer solchen Qualitätsprüfung kontrollierten Maßhaltigkeit der zugeschnittenen Lichtscheibe kalibiriert werden.

Die Qualitätskontrolle findet vorzugsweise in Linie mit dem Produktionsablauf statt oder ist im Produktionsablauf untergebracht. Wichtig ist hervorzuheben, dass grundsätzlich auch denkbar ist, die Maßhaltigkeit direkt nach dem Zuschneiden im achten Verfahrensschritt VIII zu prüfen, während die Kraftfahrzeugleuchte noch in der Aufnahme liegt.

Das Verfahren kann nach der Qualitätskontrolle im zehnten Verfahrensschritt X enden.

Wie durch einen gestrichelten Pfeil 6 dargestellt, kann in einem alternativ zum zehnten Verfahrensschritt X im Anschluss an den neunten Verfahrensschritt IX statt findenden elften Verfahrensschritt XI die nach deren Entnahme aus der Aufnahme vollständig zum Einbau in eine Einbauöffnung eines Karosserieteils oder einer Karosserie eines Kraftfahrzeugs vorbereitete Kraftfahrzeugleuchte:
- in eine Transportverpackung eingebracht und bis zu ihrem Einbau in eine Einbauöffnung gelagert und/oder transportiert, und/oder
- einer Montagelinie zum Einbau in eine Einbauöffnung zugeführt werden, wonach das Verfahren in diesem Fall endet.

Wie durch die gestrichelten Pfeile 5 und 7 dargestellt, kann der elfte Verfahrensschritt XI auch im Anschluss an den neunten Verfahrensschritt IX und nach dem zehnten Verfahrensschritt X zusätzlich statt finden, wobei die nach deren Entnahme aus der Aufnahme vollständig zum Einbau in eine Einbauöffnung eines Karosserieteils oder einer Karosserie eines Kraftfahrzeugs vorbereitete Kraftfahrzeugleuchte in dem elften Verfahrensschritt XI nach der Qualitätskontrolle im zehnten Verfahrensschritt X:
- in eine Transportverpackung eingebracht und bis zu ihrem Einbau in eine Einbauöffnung gelagert und/oder transportiert, und/oder
- einer Montagelinie zum Einbau in eine Einbauöffnung zugeführt werden, wonach das Verfahren in diesem Fall endet.

Wichtig ist hervorzuheben, dass das Anbringen leuchtenseitiger Befestigungselemente alternativ auch nach der Entnahme aus der Aufnahme nachgeholt werden kann, sofern hierfür kein Befestigungsverfahren verwendet ist, welches zu einem Verzug der Kraftfahrzeugleuchte führt.

Ebenfalls ist unter den zuvor genannten Voraussetzungen denkbar, leuchtenseitig vorgesehene Befestigungselemente erst nach dem Transport der Fahrzeugleuchten zu einer Fertigungslinie für Kraftfahrzeuge, wo die Kraftfahrzeugleuchten in entsprechende Einbauöffnungen von Karosserieteilen bzw. Karosserien befestigt werden, zu montieren. Dies kann beispielsweise unmittelbar beim Einbau der Kraftfahrzeugleuchten in die Einbauöffnungen erfolgen.

Die Erfindung ist insbesondere im Bereich der Herstellung von Kraftfahrzeugleuchten gewerblich anwendbar.

### Bezugszeichenliste

- I: Verfahrensschritt
- II: Verfahrensschritt
- III: Verfahrensschritt
- IV: Verfahrensschritt
- V: Verfahrensschritt
- VI: Verfahrensschritt
- VII: Verfahrensschritt
- VIII: Verfahrensschritt
- IX: Verfahrensschritt
- X: Verfahrensschritt
- 1: Pfeil (Verfahrensverlauf)
- 2: Pfeil (Verfahrensverlauf)
- 3: Pfeil (Verfahrensverlauf)
- 4: Pfeil (Verfahrensverlauf)
- 5: Pfeil (Verfahrensverlauf)
- 6: Pfeil (Verfahrensverlauf)
- 7: Pfeil (Verfahrensverlauf)
- 11: Pfeil (Verfahrensverlauf)
- 12: Pfeil (Verfahrensverlauf)
- 13: Pfeil (Verfahrensverlauf)
- 21: Pfeil (Verfahrensverlauf)
- 22: Pfeil (Verfahrensverlauf)
- 23: Pfeil (Verfahrensverlauf)
- 31: Pfeil (Verfahrensverlauf)
- 32: Pfeil (Verfahrensverlauf)
- 33: Pfeil (Verfahrensverlauf)

## Patentansprüche

1. Verfahren zur Herstellung von Kraftfahrzeugleuchten, welche jeweils:
- einen von einer Lichtscheibe und einem Leuchtengehäuse umschlossenen, zumindest ein Leuchtmittel mit wenigstens einer Lichtquelle beherbergenden Leuchteninnenraum,
- ein Leuchtengehäuse mit zumindest einer an der fertigen Kraftfahrzeugleuchte von der Lichtscheibe verschlossen und von wenigstens einer Wandung des Leuchtengehäuses umgebenen Lichtöffnung für einen Lichtaustritt,
aufweisen, wobei:
- die Wandung eine der Lichtöffnung zugewandte Innenoberfläche und eine der Lichtöffnung abgewandte Außenoberfläche sowie eine um die Lichtöffnung umlaufende Randfläche aufweist, welche entlang eines mit seiner Kontur den Flächenverlauf der Lichtöffnung widerspiegelnden Innenrands an die Innenoberfläche und entlang eines Außenrands an die Außenoberfläche angrenzt und zwischen Innenrand und Außenrand die Innenoberfläche und die Außenoberfläche verbindet und den Flächenverlauf der Lichtöffnung fortsetzt, und
- an dem Leuchtengehäuse mindestens ein Aufnahmepunkt vorgesehen ist,
**gekennzeichnet durch** die Verfahrensschritte:
- Bestückung (I) des Leuchtengehäuses mit den von der fertigen Kraftfahrzeugleuchte im Leuchteninnenraum beherbergten Einrichtungen und Bauteilen,
- Herstellung (II) einer gemäß dem Flächenverlauf der Lichtöffnung geformten Lichtscheibe in einem Übermaß, so dass die auf der Randfläche aufgelegte Lichtscheibe in mindestens einer Richtung über den Außenrand der Randfläche übersteht,
- Verschließen (III) der Lichtöffnung **durch** Auflegen der Lichtscheibe auf die Randfläche und Verbinden der Lichtscheibe mit dem Leuchtengehäuse, wobei die Lichtscheibe in der mindestens einen Richtung über den Außenrand übersteht,
- Einbringen (VII) der Kraftfahrzeugleuchte entsprechend ihrer Anordnung in einer Einbauöffnung lagegenau in eine Aufnahme,
- Zuschneiden (VIII) der über den Außenrand ragenden Partie der Lichtscheibe unter Bezugnahme auf die als Fixpunkte dienenden Aufnahmepunkte, und
- Entnahme (IX) der Kraftfahrzeugleuchte aus der Aufnahme.

2. Verfahren nach Anspruch 1,
**dadurch gekennzeichnet,**
**dass** nach dem Verschließen (III) der Lichtöffnung und vor dem Einbringen (VII) der mit der im Übermaß hergestellten Lichtscheibe versehenen Kraftfahrzeugleuchte in die Aufnahme mindestens ein Behandlungsschritt vorzugsweise aus der Gruppe:
- Polieren (IV) der Lichtscheibe, und/oder
- Tempern (V) der Kraftfahrzeugleuchte, und /oder
- Qualitätsprüfung (VI), und/oder
- Anbringung mindestens eines Befestigungselements mindestens einer zur Befestigung der Kraftfahrzeugleuchte in einer Einbauöffnung eines Kraftfahrzeugs vorgesehenen Befestigungsvorrichtung an dem mindestens einen hierfür vorgesehenen Aufnahmepunkt am Leuchtengehäuse
vorgenommen wird.

3. Verfahren nach Anspruch 1 oder 2,
**dadurch gekennzeichnet,**
**dass** der Flächenverlauf eben oder zweidimensional gewölbt oder dreidimensional gekrümmt ist.

4. Verfahren nach Anspruch 1, 2 oder 3,
**dadurch gekennzeichnet,**
**dass** die Lichtscheibe so hergestellt wird, dass sie allseitig über den Außenrand der Randfläche übersteht.

5. Verfahren nach einem der Ansprüche 1 bis 4,
**dadurch gekennzeichnet,**
**dass** das lagegenaue Einbringen der Kraftfahrzeugleuchte in die Aufnahme unter Ausrichtung vermittels Verwendung des mindestens einen Aufnahmepunkts am Leuchtengehäuse oder über wenigstens ein gegebenenfalls bereits an dem zumindest einen Aufnahmepunkt montiertes Befestigungselement als mindestens ein Fixpunkt erfolgt.

6. Verfahren nach Anspruch 5,
**dadurch gekennzeichnet,**
**dass** die Kraftfahrzeugleuchte über den mindestens einen Aufnahmepunkt oder die wenigstens einen gegebenenfalls bereits montierten Befestigungseinrichtung in der Aufnahme ausgerichtet und gehalten wird.

7. Verfahren nach einem der vorhergehenden Ansprüche,
**dadurch gekennzeichnet,**
**dass** das Zuschneiden vermittels Laserschneiden erfolgt.

8. Verfahren nach Anspruch 7,
**gekennzeichnet durch**
eine CO2-Laserquelle.

9. Verfahren nach einem der vorhergehenden Ansprüche,
**dadurch gekennzeichnet,**
**dass** die nach deren Entnahme aus der Aufnahme vollständig zum Einbau in eine Einbauöffnung vorbereitete Kraftfahrzeugleuchte einer Qualitätsprüfung (X) unterzogen wird, wobei die Maßhaltigkeit der zugeschnittenen Lichtscheibe kontrolliert wird.

10. Verfahren nach einem der vorhergehenden Ansprüche,
**dadurch gekennzeichnet,**
**dass** das Zuschneiden (VIII) der Lichtscheibe anhand der in der Qualitätsprüfung (X) kontrollierten Maßhaltigkeit der zugeschnittenen Lichtscheibe kalibiriert (K) wird.

11. Verfahren nach einem der vorhergehenden Ansprüche,
**dadurch gekennzeichnet,**
**dass** die nach deren Entnahme aus der Aufnahme vollständig zum Einbau in eine Einbauöffnung vorbereitete Kraftfahrzeugleuchte:
- in eine Transportverpackung eingebracht und gelagert und/oder transportiert, und/oder
- einer Montagelinie zum Einbau in eine Einbauöffnung zugeführt (XI) wird.

## Claims

1. A method for producing motor vehicle lamps, which each comprise:
- a lamp interior enclosed by a lens and a lamp housing and accommodating at least one lighting means with at least one light source,
- a lamp housing with at least one light opening for light emission, which light opening is shut off by the lens and enclosed by at least one wall of the lamp housing in the finished motor vehicle lamp,
wherein:
- the wall has an inner surface facing toward the light opening and an outer surface averted from the light opening and also a circumferential rim surface around the light opening, which rim surface adjoins the inner surface along an inner edge reflecting the surface profile of the light opening with its outline and adjoins the outer surface along an outer edge, and which rim surface connects the inner surface to the outer surface between the inner edge and the outer edge and continues the surface profile of the light opening, and
- at least one reception point is provided at the lamp housing,
**characterised by** the process steps:
- equipping (I) the lamp housing with the fittings and components accommodated in the lamp interior of the finished motor vehicle lamp,
- producing (II) a lens formed according to the surface profile of the light opening with the lens being oversized such that it projects beyond the outer edge of the rim surface in at least one direction when placed onto the rim surface,
- shutting off (III) the light opening by placing the lens onto the rim surface and connecting the lens to the lamp housing, wherein the lens projects beyond the outer edge in the at least one direction,
- inserting (VII) the motor vehicle lamp accurately positioned into a reception, according to the arrangement of said motor vehicle lamp in an installation opening,
- cutting (VIII) the portion of the lens projecting beyond the outer edge by taking the reception points as reference points, and
- extracting (IX) the motor vehicle lamp from the reception.

2. The method as recited in claim 1,
**characterised in that**
at least one treatment step is performed after shutting off (III) the light opening and before inserting (VII) the motor vehicle lamp with the lens that is produced to be oversized into the reception, which treatment step is preferably from the group:
- polishing (IV) the lens, and/or
- tempering (V) the motor vehicle lamp, and/or
- quality inspection (VI), and/or
- mounting at least one fastening element of at least one fastening appliance provided for fastening the motor vehicle lamp in an installation opening of a motor vehicle at the at least one reception point in the lamp housing provided for this purpose.

3. The method as recited in claim 1 or 2,
**characterised in that**
the surface profile is planar or two-dimensionally curved or three-dimensionally bent.

4. The method as recited in claim 1, 2, or 3,
**characterised in that**
the lens is produced such that it projects beyond the outer edge on all sides of the rim surface.

5. The method as recited in one of the claims 1 to 4,
**characterised in that**
the accurate positioning of the motor vehicle lamp in the reception is performed by way of alignment, using the at least one reception point at the lamp housing or, if applicable, using at least one fastening element previously mounted at the at least one reception point as at least one reference point.

6. The method as recited in claim 5,
**characterised in that**
the motor vehicle lamp is aligned and held in the reception by means of the at least one reception point or, if applicable, by means of the at least one previously mounted fastening appliance.

7. The method as recited in one of the previous claims,
**characterised in that**
the cutting is performed by means of laser cutting.

8. The method as recited in claim 7,
**characterised by**
a CO2 laser source.

9. The method as recited in one of the previous claims,
**characterised in that**
the motor vehicle lamp, which is completely prepared for installation into an installation opening after being extracted from the reception, undergoes a quality inspection (X) wherein the dimensional accuracy of the cut lens is checked.

10. The method as recited in one of the previous claims,
**characterised in that**
the process of cutting (VIII) the lens, which is performed on the basis of the dimensional accuracy checked by way of the quality inspection (X), is calibrated (K).

11. The method as recited in one of the previous claims,
**characterised in that**
the motor vehicle lamp, which is completely prepared for installation into an installation opening after being extracted from the reception:
- is placed into a transport package and stored and/or transported, and/or
- is fed to an assembly line for installation into an installation opening (XI).

## Revendications

1. Procédé de fabrication de lampes de véhicule automobile qui présentent chacune:
- un volume intérieur de lampe qui est entouré d'une glace et d'un boîtier de lampe et qui loge au moins un moyen lumineux ayant au moins une source de lumière,
- un boîtier de lampe avec au moins une ouverture de lumière pour la sortie de la lumière, qui, sur la lampe finie de véhicule automobile, est fermée par ladite glace et est entourée d'au moins une paroi dudit boîtier de lampe,
dans lesquelles:
- ladite paroi présente une surface intérieure montrant vers ladite ouverture de lumière et une surface extérieure montrant dans la direction opposée à ladite ouverture de lumière ainsi qu'une surface marginale qui s'étend tout autour de l'ouverture de lumière et qui est adjacente à ladite surface intérieure le long d'un bord intérieur reflétant, par son contour, l'allure de surface de ladite ouverture de lumière, et adjacente à ladite surface extérieure le long d'un bord extérieur et qui relie les surfaces intérieure et extérieure entre les bords intérieur et extérieur et poursuit l'allure de surface de ladite ouverture de lumière, et
- sur ledit boîtier de lampe est prévu au moins un point de réception,
**caractérisé par** les étapes de procédé:
- équiper (I) le boîtier de lampe des dispositifs et composants logés par la lampe finie de véhicule automobile à l'intérieur du volume intérieur de lampe,
- fabriquer (II) une glace en une surmesure, formée selon l'allure de surface de ladite ouverture de lumière, de sorte que la glace posée sur la surface marginale dépasse le bord extérieur de la surface marginale dans au moins une direction,
- fermer (III) l'ouverture de lumière en posant la glace sur la surface marginale et relier la glace au boîtier de lampe, ladite glace dépassant le bord extérieur dans ladite au moins une direction,
- insérer (VII) la lampe de véhicule automobile, conformément à sa disposition dans une ouverture de montage, à position exacte dans un logement,
- découper (VIII) la partie de la glace qui dépasse le bord extérieur en faisant référence aux points de réception servant de points fixes, et
- sortir (IX) la lampe de véhicule automobile dudit logement.

2. Procédé selon la revendication 1, **caractérisé par le fait que**, après avoir fermé (III) ladite ouverture de lumière et avant d'insérer (VII), dans ledit logement, la lampe de véhicule automobile pourvue de la glace fabriquée en surmesure, on procède à au moins une étape de traitement, de préférence parmi le groupe:
- polissage (IV) de la glace et/ou
- trempe (V) de la lampe de véhicule automobile et/ou
- contrôle de qualité (VI) et/ou
- montage, sur ledit au moins un point de réception sur le boîtier de lampe qui est prévu à cette fin, d'au moins un élément de fixation d'au moins un dispositif de fixation prévu pour fixer la lampe de véhicule automobile dans une ouverture de montage d'un véhicule automobile.

3. Procédé selon la revendication 1 ou 2, **caractérisé par le fait que** l'allure de surface est plane ou bombée à deux dimensions ou courbée à trois dimensions.

4. Procédé selon la revendication 1, 2 ou 3, **caractérisé par le fait que** ladite glace est fabriquée de manière à ce qu'elle dépasse de tout côté le bord extérieur de la surface marginale.

5. Procédé selon l'une quelconque des revendications 1 à 4, **caractérisé par le fait que** l'insertion à position exacte de la lampe de véhicule automobile dans le logement se fait avec orientation par l'utilisation dudit au moins un point de réception sur le boîtier de lampe ou par au moins un élément de fixation comme au moins un point fixe, qui, le cas échéant, est déjà monté sur ledit au moins un point de réception.

6. Procédé selon la revendication 5, **caractérisé par le fait que** la lampe de véhicule automobile est orientée et maintenue dans le logement par ledit au moins un point de réception ou ledit au moins un dispositif de fixation qui, le cas échéant, est déjà monté.

7. Procédé selon l'une quelconque des revendications précédentes, **caractérisé par le fait que** le découpage est réalisé par le biais de découpage au laser.

8. Procédé selon la revendication 7, **caractérisé par** une source laser au dioxyde de carbone.

9. Procédé selon l'une quelconque des revendications précédentes, **caractérisé par le fait que** la lampe de véhicule automobile qui, après avoir sorti celle-ci dudit logement, est complètement préparée pour être montée dans une ouverture de montage, est soumise à un contrôle de qualité (X) dans lequel on contrôle la précision dimensionnelle de la glace découpée.

10. Procédé selon l'une quelconque des revendications précédentes, **caractérisé par le fait que** le découpage (VIII) de la glace est calibré (K) à partir de la précision dimensionnelle de la glace découpée qui est contrôlée dans le contrôle de qualité (X).

11. Procédé selon l'une quelconque des revendications précédentes, **caractérisé par le fait que** la lampe de véhicule automobile qui, après avoir sorti celle-ci dudit logement, est complètement préparée pour être montée dans une ouverture de montage:
- est introduite dans un emballage de transport et stockée et/ou transportée et/ou
- est amenée à une ligne de montage pour être montée dans une ouverture de montage (XI).
